# EUROPEAN PATENT SPECIFICATION

(11) **EP 1 133 807 B1**
(45) Date of publication and mention of the grant of the patent: **16.04.2003**
(21) Application number: 99947741.7
(22) Date of filing: 04.10.1999
(51) Int. Cl.: H01M 8/02, C08J 5/22, C09J 127/12

(54) **COMPOSITE MEMBRANE**
KOMPOSITMEMBRAN
MEMBRANE COMPOSITE

(30) Priority: 16.10.1998 GB 9822571
(43) Date of publication of application: 19.09.2001
(73) Proprietor: JOHNSON MATTHEY PUBLIC LIMITED COMPANY, London SW1Y 5BQ (GB)
(72) Inventor: FONGALLAND, Dharshini, Chryshantha, Slough SL1 2JD (GB); GASCOYNE, John Malcolm, High Wycombe, Bucks HP14 4BB (GB); RALPH, Thomas, Robertson, Reading RG30 2QJ (GB)
(86) International application number: GB9903277
(87) International publication number: WO00024075

(56) References cited:
- EP-A- 0 911 432
- US-A- 4 743 349
- US-A- 4 775 551
- US-A- 5 547 550
- US-A- 5 584 977
- PATENT ABSTRACTS OF JAPAN vol. 009, no. 159 (E-326), 4 July 1985 (1985-07-04) & JP 60 037668 A (FUJI DENKI SOUGOU KENKYUSHO:KK;OTHERS: 01), 27 February 1985 (1985-02-27)
- PATENT ABSTRACTS OF JAPAN vol. 009, no. 004 (E-288), 10 January 1985 (1985-01-10) & JP 59 154769 A (SANYO DENKI KK), 3 September 1984 (1984-09-03)

## Description

The present invention relates to a composite membrane that is of use in fuel cells, and a process for the manufacture of the composite membrane.

Electrochemical cells invariably comprise an ion-conducting electrolyte and two electrodes, the anode and cathode, at which the desired electrochemical reactions take place. Electrochemical cells may be found in a range of devices, for example fuel cells, batteries, sensors, electrodialysis reactors and electrolytic reactors. They have a diverse range of applications, including the electrolysis of water, chemical synthesis, salt splitting, water purification, effluent treatment and metal finishing, among others.

A fuel cell is an energy conversion device that efficiently converts the stored chemical energy of its fuel into electrical energy. It does so by combining either hydrogen, stored as a gas or methanol, stored as a liquid or a gas, with oxygen to generate electrical power. The hydrogen or methanol is oxidised at the anode and oxygen is reduced at the cathode. Both electrodes are of the gas diffusion type. The electrolyte has to be in contact with both electrodes, and may be acidic or alkaline, and liquid or solid, in nature. In proton exchange membrane fuel cells (PEMFC), the electrolyte is a solid, ion-conducting, *i.e*. a proton-conducting, polymer membrane. The membrane is commonly based on a copolymer of perfluorosulphonic acid and tetrafluoroethylene. The combined structure formed from the membrane and the two gas diffusion electrodes is known as the membrane electrode assembly (MEA).

Conventionally, solid ion-conducting membrane electrolytes useful in fuel cells and other devices are selected from commercially-available membranes, for example perfluorinated membranes sold under the trade names Nafion® (E I DuPont de Nemours and Co.), Aciplex® (Asahi Chemical Industry) and Flemion® (Asahi Glass KK). For application in the PEMFC, they are typically below 200µm in thickness to ensure a high level of ionic conductivity. One of the problems experienced with these conventional proton-conducting membranes used for PEM fuel cell construction, is the dimensional changes that occur as the level of water content (hydration) of the membrane changes. This is a particular problem during fabrication of the MEA, in which the membrane is typically in a highly hydrated form, as the stresses produced by changes in hydration during the conventionally-employed thermal bonding process can be large enough to break the bond between either the catalyst and the membrane or the catalyst and the substrate. Furthermore, these dimensional changes lead to considerable difficulties in handling membranes during the fabrication of MEAs, particularly large area MEAs in excess of, for example, 500cm². The thinner the membrane, the more difficult the handling becomes.

Yet further, it is current practice that most MEAs are fabricated as single items, with areas of, for example, 500cm² in a batch-type process. It is critical to the successful commercialisation of the PEMFC that lower cost, high volume, MEA manufacturing processes be developed in the future, such as a continuous fabrication process. The problem of dimensional change of the membrane with changes in hydration on a continuous process, which may employ membranes of many hundreds of metres in length, would then be an even more serious issue, and would add significant complications and cost to the manufacturing process.

With thicker types of membrane (*e.g.* >350µm) developed for other applications, it has been possible to incorporate 'macro reinforcing materials, such as woven polytetrafluoroethylene (PTFE), to minimise such dimensional changes. However, these thicker materials have too low an ionic conductivity to be of use in the PEMFC. US patent 5,547,551 describes the fabrication of ultra-thin reinforced membranes, below 25µm in thickness, comprising proton-exchange polymeric material incorporated into an expanded porous PTFE membrane. According to Kolde *et al*, Electrochemical Society Proceedings 95 (23) 193-201 (1995), these reinforced membranes have considerably improved dimensional stability compared to the conventional non-reinforced membranes, such as Nafion® 117 which shows shrinkage upon dehydration from the hydrated state. However, such materials have a higher specific resistance (*i.e*. lower ionic conductivity) by a factor of at least two than a non-reinforced pure proton-conducting membrane such as Nafion® 117.

The higher specific resistance of the above reinforced membranes means that, in practice, they must be much thinner than the equivalent pure proton-conducting membrane to maintain the same overall conductivity and thus cell performance. However, reducing the thickness of the membrane reduces the advantages that a reinforced membrane can provide. For example, there is a limit to the extent to which the thickness of the membrane can be reduced, since the durability and longevity can also decrease, and reactant gas cross-over through the membrane is more liable to occur, leading to a reduction in cell performance. Furthermore, the problems associated with dimensional stability and handling for MEA fabrication can be exacerbated with thinner membranes.

There is therefore the need to overcome the disadvantages of conventional pure and prior art reinforced membranes, by providing a novel composite ion-exchange membrane having a significantly improved dimensional stability and satisfactory handling without compromising the ionic conductivity and reactant gas cross-over parameters. Furthermore, there is a need to take account of the likely process(es) by which the membrane would be manufactured in the future in choosing an appropriate membrane composition. In particular, with the prospect of continuous fabrication processes mentioned above, it is not only the structure of the membrane that may be critical. In a composite membrane generally comprising a porous substrate of fibres impregnated, coated or otherwise associated with the ion-conducting polymer (*e.g*. Nation®), the strength and stability of the substrate itself would be an important factor.

Accordingly, the present invention provides a composite membrane, which is defined by the features of claim 1.

The silica is preferably a colloidal silica binder, more preferably in the form of a colloidal aqueous solution, such as is available from DuPont, Antwerp under the trade name Syton® T40AS or Ludox®. Alternatively, a silica powder, such as is available under the Cab-O-Sil™ name from the Cabot Corporation, could be dispersed in water to produce a suitable solution.

The fluorinated hydrocarbon polymer includes non-ion-conducting polymers, such as polytetrafluoroethylene (PTFE), fluorinated ethylene-propylene (FEP), tetrafluorethylene-ethylene (ETFE) copolymers, poly(vinylfluoride) (PVF) and poly(vinylidinefluoride) (PVDF), but preferably PTFE.

Preferably, the binders are mixed before application. Most preferred is a colloidal silica:PTFE mixed binder.

The ratio of silica to polymer may be in the range of from 95:5% to 5: 95%, and is preferably in the range of 90:10% to 10:90%, such as 70:30% to 30:70%, *e.g*. 50:50%. Most preferred is when the two components are present in approximately equal amounts, based on w/w solid materials in the binder mixture.

Hence, especially preferred is a substrate comprising fibres characterised by being bound together by colloidal silica:PTFE (about 1:1).

The mixed binder for use in preparing the substrate according to the present invention is preferably in the form of a dilute aqueous dispersion, such as a 1-30%, preferably a 5-20% *e.g*. about 10wt% solids in the aqueous solution. More preferably, the binder is applied during the process for forming the matrix of fibres whilst the fibres are still wet, so that the binder replaces the water as the latter is shed. Thereafter, the bound fibres are dried.

Accordingly, the present invention further provides a process for preparing a composite membrane. Thus process is defined in claim 14.

A broad range of fibres is suitable for use in this aspect of the invention. For example, glass, polymer (but preferably not PTFE or polyethylene), silica, carbon or metal fibres may be used. In the case of carbon or metal, these fibres would need to be electrically insulated prior to forming the porous substrate into a membrane, as further defined below. Preferably, glass and/or silica fibres, or mixtures thereof are used.

The fibres within the substrate are preferably randomly orientated in the x and y direction (in-plane), producing a two-dimensional isotropic structure. Additionally, random orientation in the z direction (through-plane) can be introduced with the inclusion of very short fibres, typically lengths of less than or equal to 0.2mm or very fine fibres, typically of diameters less than or equal to 1µm. The fibres typically have a diameter in the range of from 0.1µm to 50µm, preferably 0.2µm to 20µm and, more preferably, about 0.4µm to 9µm. The fibres typically have lengths in the range of from 0.05mm to 300mm, suitably 0.5mm to 150mm, preferably 1mm to 50mm and, more preferably, about 6mm to 20mm.

The porous substrate typically has at least 50%, suitably at least 75%, of the individual pore sizes being greater than 1µm in at least one direction, although a porous substrate wherein some of the pores are less than 1µm in all directions is within the scope of the invention.

The composite membrane of the invention is suitably for use in a fuel cell. The total thickness of the membrane is less than 200µm and preferably less than 100µm.

The composite membranes according to the present invention, when used as a membrane by the incorporation of an ion-conducting polymer therein, produce a surprising effect on the dimensional stability of the membrane when subject to full hydration conditions. Accordingly, when tested by the method described hereinafter in the Examples, the dimensional changes in membranes based on the substrates according to the present invention result in less than or equal to about ±16% change in their areas. Preferably, the membranes show < ±10% area change. More preferably, the membranes show in the range of from about 0 to about 6% expansion when tested according to the method described herein.

For PEM fuel cell applications, the ion-conducting polymer is a proton-conducting polymer, examples of such polymers being well known to those skilled in the art. More than one proton-conducting polymer may be present and/or a non-proton-conducting polymer may also be included in the novel membrane of the present invention.

Proton-conducting polymers suitable for use in the present invention include, but are not limited to:
1. Polymers having a substantially fluorinated, straight or branched carbon chain, further having acidic groups or derivatives thereof selected from the following acids: sulphonic, carboxylic, phosphonic, phosphoric, and/or mixtures thereof. Perfluorinated polymers include Nafion®, Flemion® and Aciplex®, which are commercially available from E I DuPont de Nemours (*c.f*. US patents specifications numbers 3,282,875; 4,329,435; 4,330,654; 4,358,545; 4,417,969; 4,610,762; 4,433,082 and 5,094,995); Asahi Glass KK and Asahi Chemical Industry, respectively. Other such polymers include those disclosed in US patents specification numbers 5,595,676 and 4,940,525.
2. Perfluorinated or partially-fluorinated polymers further having aromatic rings, such as those described in PCT patents specifications numbers WO 95/08581, WO 95/08581 and WO 97/25369, which have been functionalised with SO₃H, PO₂H₂, PO₃H₂, CH₂PO₃H₂, COOH, OSO₃H, OPO₂H₂, and/or OPO₃H₂. Also included are radiation- or chemically-grafted perfluorinated polymers, in which the perfluorinated carbon chain is activated by radiation or chemical initiation in the presence of a monomer, such as styrene, which can be functionalised to contain an ion-exchange group. Suitable perfluorinated polymers include, for example, PTFE, fluorinated ethylene-propylene (FEP), tetrafluoroethylene-ethylene (ETFE) copolymers, tetrafluoroethylene-perfluoroalkoxy (PFA) copolymers, poly(vinyl fluoride) (PVF) and poly (vinylidene fluoride) (PVDF).
3. Fluorinated polymers, such as those disclosed in European patent specifications numbers EP 0 331 321 and EP 0345 964, having pendant saturated cyclic groups and at least one ion-exchange group that is linked to the polymeric chain through the cyclic group.
4. Aromatic polymers, such as those disclosed in European patent specification number EP 0 574 791 and US patent specification number 5 438 082, for example, sulphonated polyaryletherketones. Also polyether sulphones, which can be chemically grafted with a polymer with ion-exchange functionality, such as those disclosed in PCT patent specification number WO 94/16002.
5. Non-fluorinated polymers, including those disclosed in US patent specification number 5 468 574, for example, hydrocarbons such as styrene-(ethylene-butylene)-styrene, styrene-(ethylene-propylene)-styrene and acrylonitrile-butadiene-styrene co- and ter-polymers, where the styrene components are functionalised with sulphonate, phosphoric and/or phosphonic groups.
6. Nitrogen-containing polymers, including those disclosed in US patent specification number 5 599 639, for example, polybenzimidazole alkyl sulphonic acids and polybenzimidazole alkyl or aryl phosphonates.
7. Any of the above polymers wherein the ion-exchange group is replaced with a sulphonyl chloride (SO₂Cl) or sulphonyl fluoride (SO₂F) group, thereby rendering the polymers melt-processable. The sulphonyl fluoride polymers may form part of the precursors to the ion-exchange membrane or may be arrived at by subsequent modification of the ion-exchange membrane. The sulphonyl halide moieties can be converted to sulphonic acid using conventional techniques such as, for example, hydrolysis.

Other non-ion-conducting polymeric materials may be used in addition to the one or more ion-conducting or proton-conducting polymers. Examples of such non-ion-conducting polymers include fluorinated polymers, *e.g*. PTFE, FEP, PVDF, Viton®, and hydrocarbon types *e.g.* polyethylene, polypropylene and polymethylmethacralate.

Other ion-conducting polymeric materials which are not proton-conducting may be used in addition to, or in place of, a proton-conducting polymer. Such polymers can be used for applications requiring a bipolar membrane or a completely anion exchange membrane. Anion exchange polymers are generally based on quaternary ammonium groups, rather than the fixed sulphonic acid groups in proton conducting polymers. These include, for example, the tetra-alkyl ammonium group (-N⁺R₃) and the quaternary ammonium centre in Tosflex® membranes (-N(R₁)(CH₂)_{y}N⁺(R₃)) supplied by Tosoh. However, it can be envisaged that all of the proton exchange polymers described above could have anion exchange equivalents.

The polymer is suitably applied to the coated fibres (substrate) in the form of a solution, the solvents of which may be either organic or aqueous based. Solvents of all of the above polymers may include or may be modified to include, water, methanol and/or other aliphatic alcohols, ethers, acetone, tetrahydrofuran (THF), n-methylpyrrolidone (NMP), dimethyl sulphoxide (DMSO), dimethyl formamide (DMF), dimethyl acetamide (DMAc), or protonic solvents such as sulphuric acid or phosphoric acid, and/or mixtures of the above. However, it has been found that an essentially aqueous solution of the polymer as described in EP 0 731 520 is preferred.

A flexible free-standing, dimensionally stable composite membrane is produced by the present invention, resulting in greater handlability. The membrane of the invention is therefore also more amenable to high volume, continuous production processes, as described hereinafter. The high dimensional stability of the membrane enables thinner membranes to be produced, which are more amenable to higher volume MEA manufacturing processes than are current membranes, at similar thicknesses. Current materials show very large dimensional changes with changes in the levels of water content that occur during MEA fabrication, and are therefore very difficult to handle during the MEA fabrication process.

In a further embodiment, a laminated membrane comprising more than one polymer-containing layer is provided, at least one layer of which is a composite membrane of the invention. Where a laminated membrane is formed that comprises more than one composite membrane layer of the invention, each layer may comprise either the same or different types of fibres and porous substrates, and also the same or different types of polymeric material embedded within the porous substrate of each composite membrane layer. Using such a laminated structure, it is possible, for example, to tailor the properties of the laminate membrane opposed to the anode and cathode sides in the MEA of a proton exchange membrane fuel cell, for example, to improve water management in the fuel cell, or to be able to use lower cost proton-conducting polymers to form a substantial part of the laminate membrane.

Composite membranes of the present invention are suitable for low cost manufacture, and the substrates and membranes may be manufactured by:
(i) forming a porous substrate of, preferably randomly orientated individual, especially preferably mixed amorphous silica, fibres bound together with silica and a fluorinated hydrocarbon polymer by adapting a continuous manufacturing process, which for example may be based on wet lay processes such as those employed in paper-making, or dry lay processes employed, for example, to produce non-woven fabrics and felts; and, optionally, thereafter,
(ii) impregnating the fibre matrix substrate with the polymeric material to produce a membrane. This can be done by any number of coating processes such as printing, rolling, K-bar, doctor blade methods, spraying or thin-film casting.

For example, in a process based on a paper-making technology to prepare a composite membrane, the fibres are dispersed in water to form a dilute slurry and thereafter a continuous structure is formed by the controlled deposition of said slurry onto a moving mesh bed, dewatering the solids, and drying and compacting the fibre network. The solution containing the dispersion of the silica plus fluorinated hydrocarbon polymer binder material can be applied either at the wet end of the process, *i.e.* before the drying stage, or after the network has been dried. This is followed by nip roller coating of the substrate to fill it with a solution of the ion-conducting polymeric material, and further compaction and drying of the membrane under a suitable time, temperature and pressure regime to produce the final thin film or sheet of fibre/polymer composite membrane.

A major advantage of using a continuous manufacturing method, such as a conventional paper making technique, is that the composite membrane is easily manufactured in a fewer number of steps than prior art composite membranes, thus making it more cost-effective and commercially viable. The membrane may also be produced in continuous lengths of many metres and widths of equal to or greater than one metre. A further advantage is that is possible to combine a membrane of the present invention with one or more electrode layers as described in European patent specification number EP 0 791 974 to form a membrane electrode assembly at the same rate as each individual component could be produced.

The present invention also relates to a membrane electrode assembly and a method for the manufacture thereof, wherein the composite membrane is one according to the present invention. A still further aspect of the present invention relates to a fuel cell and a method for the manufacture thereof, which fuel cell comprises a composite membrane of the present invention.

The present invention will now be described by way of example only which is not intended to be limiting thereof.

### EXAMPLE 1: PREPARATION OF MIXED GLASS FIBRES/MIXED BINDER SUBSTRATE

A mixture of chopped glass fibres (12mm Schueller strand from Johns Manville, Insulation group, PO Box 5108, Denver, CO, USA) (0.18g) and glass microfibre (Type 608 from Evanite Fibre Corporation, Corvallis, Oregon, USA) (0.37g) were dispersed with mixing, in water (3000ml). A non-woven matrix was fabricated from the resulting mixture in a single-step process, based on the principles of paper-making technology, as a sheet size of 855cm² (33cm diameter) in a sheet former (design based on standard SCA Sheet former from AB Lorentzen & Wettre, Box 4, S-163 93 Stockholm, Sweden).

The fibre sheet, as formed on the wire and whilst still wet, was sprayed with a binder solution comprising a 10wt% aqueous dispersion of polytetrafluoroethylene (Teflon GP1®; ICI Chemicals and Polymers Ltd, PO Box 4, Thornton, Cleveleys, Blackpool, FY5 4QD) and a 10wt% solution of colloidal silica (Syton® T40AS; DuPont Speciality Chemicals, Havennummer 500, Wilmington Straat, 2030 Antwerp, Belgium) in a 1:1ratio to give a loading of 0.45g of the Teflon/silica mixture. The sheet was removed from the wire and air dried at 150°C, then fired in air at 280°C.

### EXAMPLE 2: PREPARATION OF SILICA MICROFIBRE/MIXED BINDER SUBSTRATE

A non-woven matrix was fabricated according to the method of Example 1, but using silica microfibre (Q fibre, type 106 from Johns Manville, Insulation Group, PO Box 5108, Denver, CO, USA) (0.6g). The fibre sheet, as formed on the wire and whilst still wet, was sprayed with the mixed binder solution described in Example 1 to give a loading of 0.68g of the Teflon/silica mixture. The sheet was removed from the wire and air dried at 150°C, then fired in air at 280°C.

### EXAMPLE 3: PREPARATION OF MIXED AMORPHOUS SILICA/MIXED BINDER SUBSTRATE

A mixture of chopped silica fibres (Type QC9/33-20mm from Quartz et Silice BP 521-77794 Nemours, Cedex, France) (0.18g) and silica microfibre (Q fibre, type 106 from Johns Manville, Insulation Group, PO Box 5108, Denver, CO, USA) (0.37g) were dispersed with mixing, in water (3000ml). A non-woven matrix was fabricated according to the method of Example 1.

The fibre sheet, as formed on the wire and whilst still wet, was sprayed with the mixed binder solution described in Example 1 to give a loading of 0.27g of the Teflon/silica mixture. The sheet was removed from the wire and air dried at 150°C, then fired in air at 280°C.

### COMPARATIVE EXAMPLES: Nafion® 1135, 115 & 117 Membranes

**Nafion® membrane type 1135** (produced by E I DuPont de Nemours, Polymer Products Department, Fayetteville, NC, USA) was used as received. A 10x10cm square was cut from the bulk membrane. A measurement of the membrane's mass was taken before the sample was placed in a sealable polyethylene bag of known weight. With the bag seal open, the membrane was dried overnight (∼16 h) at 40°C under vacuum (∼10mbar). After releasing the vacuum, the bag was quickly sealed before being weighed. [Mass loss from the membrane and bag together was adjusted for the average mass loss from three identical bags containing no membrane]. Lengths in the x and y directions were measured whilst the dried membrane was still in the sealed bag to establish the dehydrated dimensions.

The membrane was placed in 2 litres of de-ionised water, heated to boiling and maintained at boiling for 90 minutes. The membrane was then removed from the de-ionised water and the excess surface water removed by blotting with filter paper. The x and y dimensions were then measured using the same procedure as before.

**Nafion® membranes types 115 and 117** (also produced by E I DuPont de Nemours, Polymer Products Department, Fayetteville, NC, USA) were also used as received. A 10x10cm square was cut from each bulk membrane and treated according to the above procedure.

The dimensional changes and area change for each comparative membrane are recorded in Table 1.

### EXAMPLE 4: PREPARATION OF TRIPLE LAMINATE MEMBRANES USING SUBSTRATE OF EXAMPLE 1

The non-woven mixed glass fibre/mixed binder matrix prepared according to Example 1 was placed on a sheet of sintered PTFE and a solution of perfluorosulphonic acid (Nafion® produced by E I DuPont de Nemours) in the aqueous form as described in EP 731 520 was applied to the fibre matrix. The structure was filled with the aqueous Nafion® to achieve a total solid Nafion® loading of 7.05mg/cm².

A further two sheets were prepared in the same fashion. The three sheets were placed on top of each other and sandwiched between two thin, non-porous PTFE sheets. The sandwich was pressed at 90 to 100psig (710-780kPa) for six minutes at 177°C to produce a triple laminate membrane.

A 10x10cm square was cut from the bulk membrane and treated by the same procedure as described in the Comparative Examples. The results are recorded in Table 1.

### EXAMPLE 5: PREPARATION OF TRIPLE LAMINATE MEMBRANES USING SUBSTRATE OF EXAMPLE 2

The non-woven silica fibre/binder matrix prepared according to Example 2 was treated according to the method and materials of Example 4 (total solid Nafion® loading of 7.24mg/cm²) to produce a triple laminate membrane, whose results also appear in Table 1.

### EXAMPLE 6: PREPARATION OF SINGLE SHEET MEMBRANES USING SUBSTRATE OF EXAMPLE 1

A single sheet of the non-woven mixed silica fibre matrix with the sprayed alcoholic Nafion® binder was formed as described in Example 1 and filled with a solution of perfluorosulphonic acid (Nafion® produced by E I DuPont de Nemours) in the aqueous form as described in EP 731 520 to achieve a total solid Nafion® loading of 7.24mg/cm².

The sheet was sandwiched between two thin, non-porous PTFE sheets. The sandwich was pressed at 90 to 100psig (710-780kPa) for six minutes at 177°C to produce a membrane.

A 10x10cm square was cut from the bulk membrane and treated by the same procedure as described in the Comparative Examples. The results are recorded in Table 1.

### EXAMPLE 7: PREPARATION OF SINGLE SHEET MEMBRANES USING SUBSTRATE OF EXAMPLE 2

The non-woven silica fibre/binder matrix prepared according to Example 2 was treated according to the method and materials of Example 6 (total solid Nafion® loading of 7.04mg/cm²) to produce a membrane whose results also appear in Table 1.

**TABLE 1**

| **MIXED BINDER ON FIBRE NETWORKS** | | | | | | |
|---|---|---|---|---|---|---|
| Example | | Fibre type | Binder Type | Dimensional Changes | | |
| | | | | x (%) | y (%) | z (%) |
| CP | Nafion® 1135 | N/A | N/A | +4.1 | +25.0 | +30.0 |
| CP | Nation® 115 | N/A | N/A | +15.8 | +20.5 | +39.0 |
| CP | Nafion® 117 | N/A | N/A | +13.4 | +22.5 | +39.0 |
| 4 | triple laminate | mixed glass fibres | 1:1 colloidal silica/PTFE | +8.0 | +7.0 | +16.0 |
| 5 | single sheet | mixed glass fibres | 1:1 colloidal silica/PTFE | +2.5 | +3.0 | +5.6 |
| 6 | triple laminate | quartz microfine fibre | 1:1 colloidal silica/PTFE | +6.0 | +4.0 | +10.0 |
| 7 | single sheet | quartz microfine fibre | 1:1 colloidal silica/PTFE | 0.0 | 0.0 | 0.0 |

## Claims

1. A composite membrane, suitable for use in a fuel cell, comprising a porous substrate of fibres and at least one ion-conducting polymer, **characterised in that** the porous substrate comprises fibres that are bound with both silica and a fluorinated hydrocarbon polymer.

2. A composite membrane according to claim 1, wherein the silica comprises a 'colloidal aqueous solution, or a silica powder dispersed in water.

3. A composite membrane according to claim 1 or claim 2, wherein the fluorinated hydrocarbon polymer comprises one or more non-ion-conducting polymer(s).

4. A composite membrane according to claim 3, wherein the non-ion-conducting polymer is selected from the group consisting of polytetrafluoroethylene (PTFE), fluorinated ethylene-propylene (FEP), tetrafluorethylene-ethylene (ETFE) copolymers, poly(vinylfluoride) (PVF) and poly(vinylidinefluoride) (PVDF).

5. A composite membrane according to any preceding claim, which comprises a colloidal silica: PTFE mixed binder.

6. A composite membrane according to any preceding claim, wherein the ratio of silica to polymer is in the range of from 95:5% to 5:95% based on w/w solid materials in the binder mixture.

7. A composite membrane according to claim 6, wherein the ratio of silica to polymer is in the range of from 70:30% to 30:70% based on w/w solid materials in the binder mixture.

8. A composite membrane according to claim 6 or claim 7, wherein the ratio of silica to polymer is about 50:50% based on w/w solid materials in the binder mixture.

9. A composite membrane according to any preceding claim, wherein the mixed binder is in the form of a dilute aqueous dispersion.

10. A composite membrane according to claim 9, wherein the mixed binder is in the form of a dilute aqueous dispersion of about 10wt% solids in the aqueous solution.

11. A composite membrane according to any preceding claim, wherein the fibres comprise glass and/or silica.

12. A composite membrane according to any preceding claim, wherein the fibres have a diameter in the range of from 0.1µm to 50µm.

13. A composite membrane according to any preceding claim which, when tested by the method described herein in the Examples, results in less than or equal to about ±16% change in its area; preferably, ≤±10% area change; more preferably, in the range of from about 0 to about 6% expansion.

14. A process for the manufacture of a membrane according to any preceding claim, which process comprises
(i) forming a porous substrate of, preferably randomly orientated individual, mixed amorphous silica fibres bound with a binder by a process which comprises
(a) dispersing the fibres in water to form a slurry;
(b) depositing the slurry onto a mesh bed to form a network;
(c) drying and compacting the fibre network; and
(d) applying, before or after step (c), a dispersion of the binder; and
(ii) impregnating the fibre matrix substrate with a polymeric material to produce a membrane.

15. A process according to claim 14, wherein step (ii) is carried out by nip roller coating of the substrate to fill it with a solution of ion-conducting polymeric material, and further compaction and drying of the membrane.

16. A membrane electrode assembly comprising a composite membrane according to any one of claims 1 to 13.

17. A fuel cell comprising a composite membrane according to any one of claims 1 to 13.

## Patentansprüche

1. Komposit-Membran für die Verwendung in einer Brennstoffzelle, die ein poröses Substrat aus Fasern und mindestens einem ionenleitenden Polymer umfasst, **dadurch gekennzeichnet, dass** das poröse Substrat Fasern umfasst, die sowohl mit Siliciumdioxid als auch mit einem fluorierten Kohlenwasserstoff-Polymer gebunden sind.

2. Komposit-Membran nach Anspruch 1, in der das Siliciumdioxid eine kolloidale wässrige Lösung oder ein in Wasser dispergiertes Siliciumdioxid-Pulver umfasst.

3. Komposit-Membran nach Anspruch 1 oder 2, in der das fluorierte Kohlenwasserstoff-Polymer ein oder mehr nicht-ionenleitende Polymer(e) umfasst.

4. Komposit-Membran nach Anspruch 3, in der das nicht-ionenleitende Polymer ausgewählt ist aus der Gruppe, die besteht aus Polytetrafluoroethylen (PTFE), fluoriertem Ethylen/Propylen (FEP), Tetrafluoroethylen/Ethylen (ETFE)-Copolymeren, Poly(vinylfluorid) (PVF) und Poly(vinylidinfluorid) (PVDF).

5. Komposit-Membran nach irgendeinem vorhergehenden Anspruch, die ein gemischtes kolloidales Siliciumdioxid : PTFE-Bindemittel umfasst.

6. Komposit-Membran nach irgendeinem vorhergehenden Anspruch, in der das Verhältnis von Siliciumdioxid zu Polymer in dem Bereich von 95 : 5 % bis 5 : 95 % liegt, bezogen auf das Gewicht der Feststoffmaterialien in der Bindemittelmischung.

7. Komposit-Membran nach Anspruch 6, in der das Verhältnis von Siliciumdioxid zu Polymer in dem Bereich von 70 : 30 % bis 30 : 70 % liegt, bezogen auf das Gewicht der Feststoffmaterialien in der Bindemittelmischung.

8. Komposit-Membran nach Anspruch 6 oder 7, in der das Verhältnis von Siliciumdioxid zu Polymer etwa 50 : 50 % beträgt, bezogen auf das Gewicht der Feststoffmaterialien in der Bindemittelmischung.

9. Komposit-Membran nach irgendeinem vorhergehenden Anspruch, in der die Bindemittelmischung in Form einer verdünnten wässrigen Dispersion vorliegt.

10. Komposit-Membran nach Anspruch 9, in der die Bindemittelmischung in Form einer verdünnten wässrigen Dispersion mit etwa 10 Gew.-% Feststoffen in wässriger Lösung vorliegt.

11. Komposit-Membran nach irgendeinem vorhergehenden Anspruch, in der die Fasern Glas- und/oder Siliciumdioxid-Fasern umfassen.

12. Komposit-Membran nach irgendeinem vorhergehenden Anspruch, in der die Fasern einen Durchmesser in dem Bereich von 0,1 bis 50 µm haben.

13. Komposit-Membran nach irgendeinem vorhergehenden Anspruch, deren Fläche sich bei dem in den Beispielen beschriebenen Testverfahren um ≤ etwa ± 16 %, vorzugsweise ≤ ± 10 % ändert, deren Fläche sich besonders bevorzugt um etwa 0 bis etwa 6 % ausdehnt.

14. Verfahren zur Herstellung einer Membran nach irgendeinem vorhergehenden Anspruch, das umfasst:
(i) die Bildung eines porösen Substrats aus vorzugsweise willkürlich orientierten einzelnen gemischten amorphen Siliciumdioxid-Fasern, die mit einem Bindemittel nach einem Verfahren gebunden sind, das umfasst
(a) das Dispergieren der Fasern in Wasser zur Bildung einer Aufschlämmung;
(b) das Abscheiden der Aufschlämmung auf einem Maschengitter unter Bildung eines Netzwerks;
(c) Das Trocknen und Pressen des Fasernetzwerks; und
(d) das Aufbringen einer Dispersion des Bindemittels vor oder nach Durchführung der Stufe (c); und
(ii) das Imprägnieren des Fasermatrix-Substrats mit einem polymeren Material zur Herstellung einer Membran.

15. Verfahren nach Anspruch 14, bei dem die Stufe (ii) durchgeführt wird durch Presswalzen-Beschichtung des Substrats, um es mit einer Lösung eines ionenleitenden polymeren Materials zu füllen, und anschließendes Pressen und Trocknen der Membran.

16. Membran-Elektroden-Anordnung, die eine Komposit-Membran nach einem der Ansprüche 1 bis 13 umfasst.

17. Brennstoffzelle, die eine Komposit-Membran nach einem der Ansprüche 1 bis 13 umfasst.

## Revendications

1. Membrane composite, convenant à une utilisation dans une cellule à combustible, comprenant un substrat poreux de fibres et au moins un polymère conduisant les ions, **caractérisée en ce que** le substrat poreux comprend des fibres qui sont liées à la fois avec de la silice et avec un polymère hydrocarboné fluoré.

2. Membrane composite selon la revendication 1, dans laquelle la silice comprend une solution aqueuse colloïdale ou une poudre de silice dispersée dans de l'eau.

3. Membrane composite selon la revendication 1 ou la revendication 2, dans laquelle le polymère hydrocarboné fluoré comprend un ou plusieurs polymères ne conduisant pas les ions.

4. Membrane composite selon la revendication 3, dans laquelle le polymère ne conduisant pas les ions est choisi dans le groupe constitué par les copolymères de polytétrafluoroéthylène (PTFE), éthylène-propylène fluoré (FEP), tétrafluoroéthylène-éthylène (ETFE), le poly(fluorure de vinyle) (PVF) et le poly(fluorure de vinylidène) (PVDF).

5. Membrane composite selon l'une quelconque des revendications précédentes, qui comprend un liant mixte silice colloïdale : PIFE.

6. Membrane composite selon l'une quelconque des revendications précédentes, dans laquelle le rapport de la silice au polymère est dans la plage de 95:5 % à 5:95 %, par rapport au poids des matières solides dans le mélange de liants.

7. Membrane composite selon la revendication 6, dans laquelle le rapport de la silice au polymère est dans la plage de 70:30 % à 30:70 %, par rapport au poids des matières solides dans le mélange de liants.

8. Membrane composite selon la revendication 6 ou la revendication 7, dans laquelle le rapport de la silice au polymère est d'environ 50:50 %, par rapport au poids des matières solides dans le mélange de liants.

9. Membrane composite selon l'une quelconque des revendications précédentes, dans laquelle le liant mixte est sous forme d'une dispersion aqueuse diluée.

10. Membrane composite selon la revendication 9, dans laquelle le liant mixte est sous forme d'une dispersion aqueuse diluée d'environ 10 % en poids de matières solides dans la solution aqueuse.

11. Membrane composite selon l'une quelconque des revendications précédentes, dans laquelle les fibres comprennent du verre et/ou de la silice.

12. Membrane composite selon l'une quelconque des revendications précédentes, dans laquelle les fibres ont un diamètre dans la plage de 0,1 µm à 50 µm.

13. Membrane composite selon l'une quelconque des revendications précédentes qui, lorsqu'elle est testée par le procédé décrit ici dans les exemples, conduit à un changement de sa surface inférieur ou égal à environ ± 16 % ; de préférence un changement de surface ≤ ± 10 % ; mieux encore une dilatation dans la plage d'environ 0 à environ 6 %.

14. Procédé de fabrication d'une membrane selon l'une quelconque des revendications précédentes, procédé qui comprend
(i) la formation d'un substrat poreux de fibres de silice amorphe mélangées, individuelles, de préférence orientées de façon aléatoire, liées avec un liant par un procédé qui comprend
(a) la dispersion des fibres dans de l'eau pour former une suspension ;
(b) le dépôt de la suspension sur un lit de toile pour former un réseau ;
(c) le séchage et la compression du réseau de fibres ; et
(d) l'application, avant ou après l'étape (c), d'une dispersion du liant ; et
(ii) l'imprégnation du substrat à matrice de fibres avec un matériau polymère pour produire une membrane.

15. Procédé selon la revendication 14, dans lequel l'étape (ii) est réalisée par revêtement avec un rouleau pinceur du substrat pour le remplir d'une solution de matériau polymère conduisant les ions puis par la compression et par le séchage de la membrane.

16. Electrode à membrane comprenant une membran composite selon l'une quelconque des revendications 1 à 13.

17. Cellule à combustible comprenant une membrane composite selon l'une quelconque des revendications 1 à 13.
